Europäisches Patentamt

European Patent Office

Office européen des brevets

(11) Numéro de publication : **0 419 645 B1**

(19)

(12) **FASCICULE DE BREVET EUROPEEN**

(45) Date de publication du fascicule du brevet :
**22.09.93 Bulletin 93/38**

(21) Numéro de dépôt : **90907104.5**

(22) Date de dépôt : **17.04.90**

(86) Numéro de dépôt international :
**PCT/FR90/00280**

(87) Numéro de publication internationale :
**WO 90/12911 01.11.90 Gazette 90/25**

(51) Int. Cl.$^5$ : **D03D 11/00**

(54) **STRUCTURE TEXTILE DEFORMABLE.**

(30) Priorité : **18.04.89 FR 8905143**

(43) Date de publication de la demande :
**03.04.91 Bulletin 91/14**

(45) Mention de la délivrance du brevet :
**22.09.93 Bulletin 93/38**

(84) Etats contractants désignés :
**AT BE CH DE DK ES FR GB IT LI LU NL SE**

(56) Documents cités :
**EP-A- 56 351**
**EP-A- 299 309**
**FR-A- 1 068 334**
**FR-A- 2 593 525**

(73) Titulaire : **BROCHIER S.A.**
**33 Avenue Franklin Roosevelt B.P. 272**
**F-69152 Décines Charpieu Cédex (FR)**

(72) Inventeur : **AUCAGNE, Jean**
**Pierre-Blanche, Rochetoirin**
**F-38110 La Tour-du-Pin (FR)**

(74) Mandataire : **Phélip, Bruno et al**
**c/o Cabinet Harlé & Phélip 21, rue de La**
**Rochefoucauld**
**F-75009 Paris (FR)**

EP 0 419 645 B1

Jouve, 18, rue Saint-Denis, 75001 PARIS

## Description

La présente invention concerne le domaine des structures textiles et plus particulièrement celles qui sont adaptées à la fabrication de matériaux composites. L'invention concerne plus spécialement une structure textile apte à la déformation et pouvant donc être mise en forme de manière avantageuse, lors du processus de moulage pour l'obtention du matériau composite final.

On sait que les matériaux composites sont constitués d'un renfort textile et d'une matrice de résine, cet ensemble étant réalisé et mis en forme lors d'une opération de moulage. Il n'est pas besoin de revenir en détail sur les diverses techniques pouvant pratiquement être utilisées pour la fabrication de tels matériaux composites, car elles sont maintenant bien connues de l'homme du métier.

Les fabricants de matériaux composites savent bien que la forme des pièces finales à obtenir pose souvent des problèmes techniques difficiles à résoudre. En effet, le renfort textile doit être conformé en conséquence, soit au préalable, soit lors de la mise en place dans le moule. Lorsqu'il s'agit de fabriquer des pièces de forme développable, les éléments de renfort textile peuvent être préparés sans difficulté majeure, sauf à permettre une bonne injection de résine dans le moule avant la polymérisation conduisant au matériau composite final. Les difficultés techniques tiennent alors à la nature même du matériau composite et non pas à sa forme. Tout au contraire, lorsqu'il faut fabriquer des pièces non développables, on est obligé de mettre en oeuvre des éléments séparés de renfort textile, qu'il convient donc de couper, de mettre en place et de superposer, de manière à fournir un renfort correspondant à la forme finale désirée. Toute découpe dans un renfort textile introduit une discontinuité dans les fils et fibres qui la constituent, ce qui entraîne des zones de faiblesse dans la pièce en matériau composite. Ceci est tout à fait inacceptable pour certaines applications, par exemple dans l'aéronautique. En outre, les opérations de découpe sont longues et coûteuses.

Le brevet FR-1 068 334 est relatif à un procédé d'obtention d'une matière fibreuse, destinée au renforcement de matières plastiques. L'objet de ce brevet est de réaliser un réseau de plusieurs tissus, imbriqués entre eux par l'opération même de tissage.

L'imbrication entre les tissus est obtenue par les fils de chaîne qui passent périodiquement d'un tissu à un autre.

La matière fibreuse obtenue par ce procédé permet de limiter les risques de clivage qui peuvent exister lorsque deux couches de tissu voisines ne sont pas reliées entre elles par un lien fibreux.

Cependant, du fait même de l'imbrication entre les tissus, la matière fibreuse obtenue n'est pas déformable et ne peut donc pas être mise en forme de manière avantageuse.

On s'efforce donc à l'heure actuelle de mettre au point des structures textiles qui peuvent être déformées, de manière à réduire d'une manière significative tous les temps de mise en oeuvre permettant de fabriquer une pièce en matériau composite, tout en évitant les découpes, la structure textile pouvant alors être préformée pour être adaptée à la forme de la pièce à obtenir.

C'est ce problème technique qui est à la base de la présente invention. Celle-ci apporte une solution simple et procure des résultats très avantageux par rapport aux propositions de l'art antérieur.

On a déjà suggéré d'utiliser comme renforts textiles des tissus de texture assez lâche, de manière à ce qu'ils prêtent lors de la mise en forme. Mais, à la connaissance du demandeur, cette solution n'a jamais abouti à des résultats pratiques satisfaisants car, si une structure est déformable, elle ne remplit pas pour autant les autres critères nécessaires pour qu'elle constitue un bon renfort textile pour matériaux composites.

A titre de simple exemple, les mats, qui sont constitués de fils et fibres répartis de manière aléatoire, sont aisément déformables, mais possèdent de très mauvaises propriétés mécaniques. De même, des tissus de type satin ne conviennent pas non plus. Malgré une certaine capacité de déformation, un tel tissu fait des plis si l'on essaie de le mettre en place sur une surface complexe présentant des particularités. Ainsi, la présence de plis affaiblit sensiblement les propriétés mécaniques de la pièce en matériau composite.

On a déjà proposé d'utiliser des tissus comportant des fils dans une direction et, dans l'autre direction, des fils ondulés, cette ondulation étant orientée dans le plan du tissu. Une telle structure textile possède la capacité de se déformer, au moins dans une direction parallèle à l'axe des ondulations. Toutefois, après déformation, l'orientation des fibres est fondamentalement modifiée, ce qui ne permet donc pas de prévoir les propriétés des matériaux composites mis en forme et contenant de telles structures comme renforts. On sait également qu'il existe des tissus comportant des fils ondulés dont les ondulations sont perpendiculaires au plan du tissu. Ces tissus sont déformables, au moins dans la direction des ondulations, mais ils ne procurent pas non plus une orientation optimale des fibres lorsqu'ils sont mis en forme pour servir de renfort dans des matériaux composites. Comme dans le cas des ondulations dans le plan, mais avec un degré moindre, de tels tissus ne conviennent pas pour des matériaux composites haute performance.

On a encore proposé d'utiliser comme structures textiles, des tissus obtenus par entrecroisements obliques de fils, de manière à réaliser des structures assez lâches, analogues à des treillis, dont les intervalles

2

séparant les fils ont une forme similaire à des losanges ou des parallélogrammes, ayant une certaine capacité de déformation. Toutefois ces structures sont très lâches, et il n'est pas possible d'obtenir des taux de couverture de fibres dans le renfort textile, qui soient suffisants pour obtenir des bonnes propriétés dans le matériau composite. Par taux de couverture de fibres, on entend en général le rapport du volume occupé par les fibres par rapport au volume de la surface textile.

On connaît aussi des structures textiles obtenues en superposant un certain nombre de tissus ou nappes, dans lesquels les fils et fibres ont une certaine capacité de glissement les uns par rapport aux autres. Il existe ainsi des structures dans lesquelles les fibres peuvent, lors de la déformation, s'orienter dans une direction généralement parallèle à celle du plan d'ensemble de la structure. Ce genre de structure, de type multidirectionnel, ne convient pas non plus comme renfort pour matériaux composites, car lorsqu'il est utilisé pour réaliser des pièces présentant des angles vifs, Le glissement des fibres entraîne une perforation du tissu, ce qui est évidemment inacceptable.

Enfin, on a déjà suggéré d'utiliser des tissus ou nappes superposés, généralement au nombre de deux, ou au plus de trois, qui sont maintenus par un liage très lâche, de manière à permettre un glissement des fils et fibres parallèlement au plan d'ensemble de la structure, de sorte que, lors de la mise en forme sur une surface courbe, les fils épousent sensiblement le contour de la forme. Si le concept général de cette solution paraît bon, il n'a pas donné lieu, jusqu'à présent, à une réalisation pratique satisfaisante, surtout en raison des mauvaises performances obtenues lors de l'utilisation comme renfort textile. Ainsi, la déformabilité peut être obtenue de manière satisfaisante, mais les performances de la structure à l'état sec, et surtout après mise en forme et imprégnation, ne sont pas suffisantes pour les besoins des renforts pour matériaux composites de haute performance.

Pour fixer les idées, si l'on adopte une échelle arbitraire pour évaluer de telles performances après imprégnation de la structure, et en attribuant la valeur de 10 à un mat, pour ce qui est des performances mécaniques, on peut estimer à une valeur voisine de 12 les résultats procurés par une structure avec tissu comportant des ondulations dans le plan, à une valeur d'environ 14-15 les tissus à ondulation perpendiculaire à leur plan, de même que les tissus en treillis. Pour les tissus autorisant une glissement parallèle des fibres, il n'est pas actuellement possible de concilier en même temps une bonne aptitude à la déformation et des performances mécaniques suffisantes. Si, en adoptant l'échelle arbitraire précitée, de tels tissus permettent d'atteindre des valeurs de 18-20, ils ne sont plus alors suffisamment déformables. A l'inverse, lorsque, avec un liage suffisamment lâche, on obtient une déformabilité satisfaisante, les performances mécaniques ne dépassent pas une valeur de 14-15, comme pour un tissu en treillis.

La présente invention part de l'état de la technique précité pour créer une structure textile capable de posséder en même temps une haute aptitude à la déformation et de fournir de bonnes performances mécaniques lors de l'utilisation comme renfort textile pour matériaux composites. En même temps, la structure textile peut être réalisée et obtenue à faible coût.

Un autre objet de l'invention est une structure textile qui peut être réalisée en maintenant un taux de fibres sensiblement constant et homogène dans le renfort textile une fois conformé et dans la pièce finale en matériau composite, dans la mesure où l'on peut prévoir à l'avance le taux de fibres en le faisant varier à la demande dans certaines zones de la structure, dont on sait qu'elles correspondront à certaines parties de la pièce finale à obtenir. On peut notamment prévoir que le taux de fibres soit relativement plus élevé dans les parties du tissu correspondant aux parties de la pièce impliquant des déformations relativement plus importantes de façon à ce que le taux de fibre soit sensiblement homogène et constant dans la pièce finale en matériau composite.

L'invention a pour objet une structure textile comprenant une superposition de nappes unidirectionnelles de fils, dont les directions sont croisées les unes par rapport aux autres et qui sont liées par des fils de liage, ladite structure étant caractérisée en ce que le nombre de nappes superposées est au moins égal à trois, en ce et que le taux de liage se situe entre 2 et 15 % environ et en ce que chaque fil de liage lie au moins un ensemble de fils de nappes superposées, défini par au moins un premier fil d'une première nappe et au moins un deuxième fil d'une deuxième nappe, ledit deuxième fil étant décalé par rapport au premier, la liaison des nappes étant ainsi suffisamment lâche pour maintenir la structure et lui permettre de se déformer.

Selon l'invention, l'expression "superposition de nappes" signifie que les nappes sont placées l'une sur l'autre, sans embuvage.

Selon l'invention, l'expression "taux de liage" désigne le rapport de la masse de fils de liage à la masse de fils de la structure.

Selon l'invention, l'expression "le fil de liage lie un ensemble de fils" signifie que le fil de liage entoure cet ensemble sans passer au travers de celui-ci.

Selon un mode particulier de réalisation de l'invention, les fils de même direction sont répartis en rangées sensiblement superposées, chaque fil de liage liant au moins certains des fils d'une rangée en même temps

EP 0 419 645 B1

qu'au moins certains fils d'au moins une rangée adjacente.

Selon l'invention, la phrase selon laquelle "le fil de liage lie deux rangées adjacentes de fils" signifie que le fil de liage entoure partiellement ces deux rangées, sans passer entre elles selon une orientation sensiblement orthogonale aux nappes de fils.

Selon un mode préféré de réalisation de l'invention, les nappes sont parallèles entre elles.

Selon un autre mode préféré de réalisation de l'invention, la direction des fils d'une nappe fait un angle de 90° environ avec celle des nappes adjacentes.

Pour les besoins de l'invention, on utilise des fils et fibres techniques convenant pour les renforts textiles utilisés dans la fabrication des matériaux composites. La structure peut donc comprendre des nappes formées de fils et fibres métalliques, de verre, de carbone, de carbure de silicium, de bore, d'aramide et autres fibres techniques similaires. Les fils constitutifs des nappes peuvent être de nature thermoplastique ou associés à une résine thermoplastique, notamment par gainage, mélange intime ou pré-imprégnation. A l'intérieur d'une même structure textile, on peut trouver des nappes de natures différentes ainsi qu'une ou des nappe(s) de nature hybride. Les résultats optimaux ont été obtenus avec des fibres de verre.

On a indiqué précédemment que le nombre de nappes unidirectionnelles superposées était au moins égal à trois. Les besoins de l'invention sont remplis avec des structures consistant en des tissus relativement épais, pour conférer une bonne résistance mécanique à l'ensemble, tout en étant déformables.

Le poids unitaire de la structure textile à l'état sec, c'est-à-dire sans résine de pré-imprégnation, est compris par exemple entre 300 et 1000 g/m$^2$ environ et de préférence, entre 400 et 600 g/m$^2$ environ, les poids unitaires de surface les plus faibles étant réservés aux usages aéronautiques, alors que les valeurs de la gamme les plus élevées, qui correspondent à des tissus plus lourds, peuvent être employées pour des applications moins coûteuses.

L'une des caractéristiques essentielles de l'invention est la présence de fils de liage en nombre et en orientation bien définis. Ainsi, par exemple, les structures connues dites "tridimensionnelles", comme celles décrites dans la demande de brevet EP-0 056 351, comprennent des nappes unidirectionnelles de fils, dont les directions sont croisées les unes par rapport aux autres, les fils des nappes de même direction étant répartis en rangées sensiblement superposées. Les nappes sont liées par des fils de liage dont l'orientation est sensiblement perpendiculaire aux nappes et qui sont disposés entre deux rangées de fil adjacentes des nappes superposées. Contrairement à ces structures, dans lesquelles le taux de liage est élevé, et par exemple situé entre 15 et 20 %, la valeur du taux de liage dans la structure de l'invention se situe entre 2 et 15 % environ, de manière à constituer une structure lâche, apte à la déformation. Outre celle condition concernant le taux de liage, il faut aussi que les fils de liage aient certaines orientations, de manière à ne pas enfermer successivement tous les fils des rangées de nappes superposées, en passant d'une rangée à la rangée adjacente.

Dans la structure selon l'invention, les fils de liage peuvent lier tous les fils d'une rangée mais, en même temps, ils lient aussi au moins certains fils d'au moins une rangée adjacente. Des exemples en seront donnés ci-après. L'orientation des fils de liage par rapport aux nappes superposées peut être sensiblement orthogonale à celles-ci ou, au contraire, les fils de liage peuvent s'étendre obliquement pour lier successivement un certain nombre de fils dans des rangées adjacentes. Des illustrations de ce mode de réalisation seront également indiquées plus loin.

On utilise en général des fils de liage de diamètre plus fin que les fils constitutifs des nappes. En effet, le rôle des fils de liage est uniquement de maintenir la structure, en constituant une sorte de bâti. A cet égard, les fils de liage peuvent être réalisés d'une manière quelconque, en fibres naturelles ou artificielles. Il peut s'agir de fils restant à demeure dans le matériau composite final ou, au contraire, ils peuvent consister en des fils thermo-fusibles, qui disparaissent lors de la fabrication de la pièce en matériau composite. Egalement, les fils de liage peuvent être de nature thermoplastique ou associés à une résine thermo-plastique, notamment par gainage, mélange intime ou pré-imprégnation. En général, on préfère cependant des fils fins qui permettent de mieux satisfaire aux exigences de poids et de caractéristiques mécaniques de la structure finale.

Les avantages procurés par l'invention sont illustrés par un certain nombre d'essais qui montrent que les structures présentent à la fois une haute aptitude à la déformation, tout en conférant de bonnes propriétés mécaniques au renfort textile du matériau composite, ceci pour un coût peu élevé, avec une répartition de fibres au sein de la pièce telle que l'on n'a constaté ni perforation dans les angles aigus, si la pièce à fabriquer en comporte, ni plis ou ondulations, cette répartition de fibres étant sensiblement homogène et constante.

La structure textile selon l'invention peut être utilisée après avoir été imprégnée de résine, en particulier thermodurcissable.

Sous un autre aspect, l'invention a également pour objet les pièces finales composites comprenant au moins une structure textile du type décrit précédemment.

L'invention sera mieux comprise et d'autres buts, avantages et caractéristiques de celle-ci apparaîtront plus clairement à la lecture de la description qui suit de modes de réalisation de l'invention donnés à titre non limitatif

4

et à laquelle des dessins sont annexés sur lesquels :
- la figure 1 est une vue schématique en coupe selon les fils de chaîne d'un premier exemple d'une structure textile selon l'invention,
- la figure 2 est une vue schématique en coupe selon les fils de chaîne d'un deuxième exemple d'une structure textile selon l'invention,
- la figure 3 est une vue schématique en coupe selon les fils de chaîne d'un troisième exemple d'une structure textile selon l'invention,
- la figure 4 est une vue schématique en coupe selon les fils de chaîne d'un quatrième exemple d'une structure textile selon l'invention,
- la figure 5 est une vue schématique en coupe selon les fils de chaîne d'un cinquième exemple d'une structure textile selon l'invention,
- la figure 6 est une vue schématique en coupe selon les fils de chaîne d'un sixième exemple d'une structure textile selon l'invention,
- la figure 7 est une vue schématique en coupe selon les fils de chaîne d'un septième exemple d'une structure textile selon l'invention,
- la figure 8 illustre un exemple de structure connue dite "tridirectionnelle",
- la figure 9 est une vue cavalière d'un tissu selon l'invention drapé sur une première pièce de forme particulière,
- la figure 10 est une vue développée du tissu de la figure 8 et
- la figure 11 est une vue cavalière d'un tissu selon l'invention drapé sur une deuxième pièce de forme particulière.

Les éléments communs aux différentes figures seront désignés par les mêmes références.

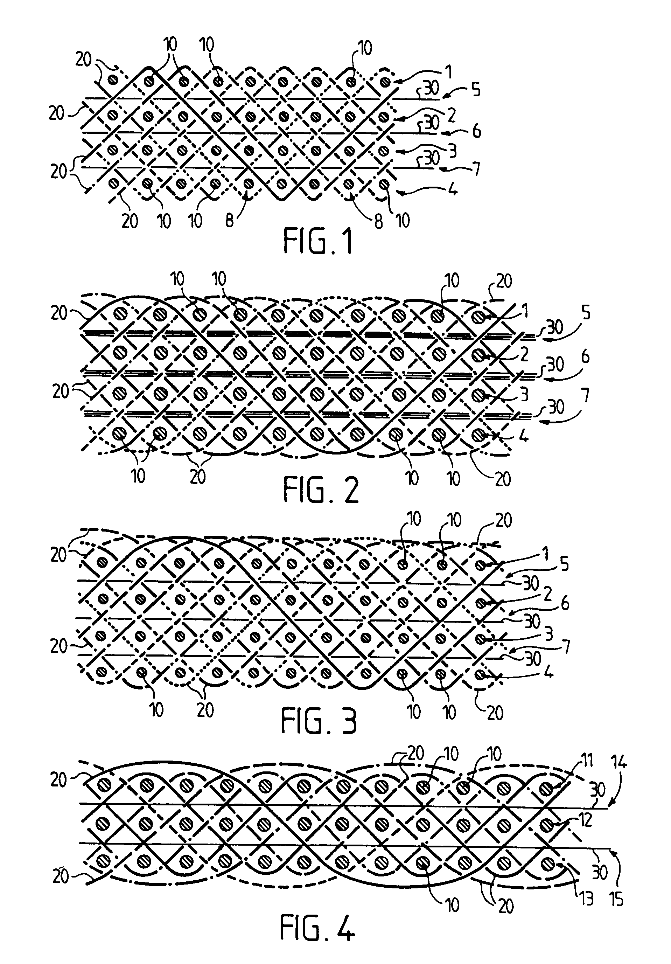

La figure 1 montre une structure textile comprenant quatre nappes 1 à 4 de fils de trame 10 et trois nappes 5 à 7 de fils de chaîne 30 disposées en alternance, les fils ayant tous la même direction, à l'intérieur d'une même nappe.

On peut noter que les fils ont sensiblement la même direction d'une nappe à une autre de même nature (chaîne ou trame). Les nappes sont disposées de façon à ce que la direction d'une nappe se trouve croisée par rapport à celle des nappes adjacentes. Ici, les directions de deux nappes adjacentes sont sensiblement à 90° l'une de l'autre.

Les nappes sont disposées de plus de telle sorte que les fils de même direction sont répartis en rangées 8 sensiblement perpendiculaires au plan des nappes.

Les nappes empilées de la structure textile sont liées par des fils de liage 20. Le mode de liage est du type sergé 7 lie 1. Les fils de liage sont représentés de façon différente pour les distinguer.

La figure 2 montre une structure textile comportant un empilement de nappes de fils sensiblement identique à celui de la structure textile représentée à la figure 1.

Les fils de liage 20 qui relient les nappes de l'empilement sont ici disposés selon un mode du type sergé 8 lie 2.

La figure 3 représente une structure textile composée d'un empilement de nappes de fils sensiblement identique à celui de la structure textile de la figure 1.

Les fils de liage 20 sont ici disposés selon un mode du type sergé composé asymétrique : 7 lie 3 sur la nappe supérieure 1 de fils de trame et 9 lie 1 sur la nappe inférieure 4 de fils de trame.

La figure 4 montre une structure textile comprenant trois nappes 11 à 13 de fils de trame 10 et deux nappes 14 et 15 de fils de chaîne 30 disposées en alternance et présentant les mêmes caractéristiques que celles décrites en référence à la figure 1.

Les nappes de l'empilement sont reliées par des fils de liage 20 disposés selon un mode du type sergé composé symétrique : 8 lie 4 et 5 lie 1.

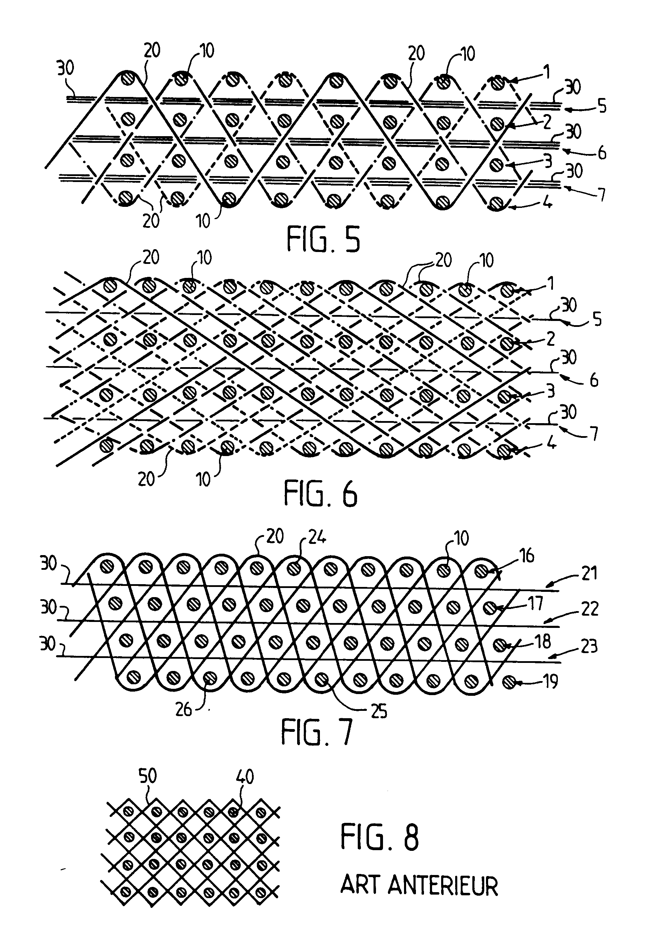

En référence à la figure 5, la structure textile est composée d'un empilement de nappes de fils sensiblement identique à celui de la structure textile de la figure 1.

Les fils de liage 20 sont ici orientés de façon à présenter un angle important avec les nappes de l'empilement. Cet angle est ici proche de 90°. Le mode de liage représenté est du type sergé 5 lie 1.

On peut noter que les fils de liage peuvent présenter un angle s'approchant de 90° avec les nappes de l'empilement dans la mesure où ils ne lient pas successivement tous les fils des rangées perpendiculaires au plan des nappes. Ainsi, une structure textile dont les fils de liage sont disposés selon un mode du type sergé 3 lie 2 est conforme à l'invention.

La structure textile représentée à la figure 6 comporte un empilement de nappes de fils de trame 10 et de fils de chaîne 30 sensiblement identique à celui de la figure 1.

Les fils de liage sont orientés de façon à présenter un angle relativement faible avec les nappes de l'empilement. Le mode de liage représenté est du type sergé 10 lie 1.

On peut remarquer qu'il n'est pas nécessaire que la disposition des nappes entraîne une répartition des fils de même direction selon des rangées sensiblement superposées, perpendiculaires au plan des nappes. Ceci n'a pas en effet de conséquence sur les fonctions que remplit la structure textile selon l'invention et sur ses propriétés mécaniques. En tout état de cause, lorsqu'une structure est drapée sur une pièce, les nappes de fils qui la constituent glissent les unes par rapport aux autres.

Ainsi, l'invention n'est pas limitée à une répartition des fils de même direction selon des rangées sensiblement superposées.

Par exemple, la figure 7 montre une structure textile selon l'invention comprenant, comme celle illustrée à la figure 1, quatre nappes 16 à 19 de fils de trame 10 et trois nappes 21 à 23 de fils de chaîne 30, disposées en alternance, les fils ayant tous la même direction à l'intérieur d'une même nappe.

On peut remarquer que les nappes sont disposées de façon à ce que la direction d'une nappe se trouve croisée par rapport à celle des nappes adjacentes. Dans cet exemple, les directions de deux nappes adjacentes sont sensiblement à 90° l'une de l'autre.

Les nappes sont disposées de telle sorte que les fils des nappes de même nature (chaîne ou trame) ne sont pas superposés mais décalés les uns par rapport aux autres.

Les nappes empilées de la structure textile sont liées par des fils de liage 20. Le mode de liage est du type sergé 4 lie 1. On peut noter que chaque fil de liage lie entre deux passages sur la nappe inférieure 19 par exemple, un ensemble de fils de nappes parallèles entre elles. Un de ces ensembles est défini par un premier fil d'une première nappe, par exemple le fil 24 de la nappe 16, un deuxième fil d'une deuxième nappe, par exemple le fil 25 de la nappe 19 et un troisième fil d'une troisième nappe, par exemple le fil 26 de la nappe 19. Les deuxième et troisième fils 25, 26 sont décalés par rapport au premier fil 24.

Il est nécessaire par contre que la structure textile comporte au moins trois nappes de fils superposées. On constate en effet qu'une structure textile composée de seulement deux nappes se déforme beaucoup moins bien.

Dans ces différents exemples de structure textile selon l'invention, le taux de liage est compris entre 2 et 15 % environ. C'est une condition nécessaire pour que le tissu soit déformable tout en étant suffisamment maintenu par les fils de liage.

L'invention et les avantages qu'elle apporte par rapport aux structures textiles connues seront encore mieux mis en évidence par les comparaisons effectuées, concernant les performances mécaniques et la drapabilité de structures textiles obtenues selon des techniques connues et selon l'invention.

En ce qui concerne les performances mécaniques, la comparaison sera effectuée entre trois structures textiles : la première, désignée ci-après par structure (1), est conforme à l'invention ; la deuxième, désignée ci-après par structure (2) est un tissu du type sergé et la troisième, désignée ci-après par structure (3), est un tissu du type tridirectionnel.

La structure textile (1) a été réalisée de façon à présenter les caractéristiques suivantes :
- Armure : Structure textile réalisée conformément au quatrième exemple de réalisation de la structure textile selon l'invention, décrit en référence à la figure 4.
- Nature du fil :
    . chaîne : silionne 300 tex
    . fil de liage : silionne 34 tex
    . trame : roving 160 tex.
- Masse surfacique : 600 g/m$^2$ environ.
- Contexture :
    . chaîne : 9,6 fils/cm
    . fil de liage : 4,8 fils/cm
    . trame : 18,5 coups/cm.
- Répartition en masse :
    . chaîne : 48 %
    . fil de liage : 3 %
    . trame : 49 %.
La structure textile (2) a été tissée de façon à présenter les caractéristiques suivantes :
- Armure : sergé 2 lie 2.
- Nature du fil :
    . chaîne : 3 fils parallèles de silionne 68 tex.
    . trame : 3 fils parallèles de silionne 68 tex.
- Masse surfacique : 295 g/m$^2$ environ.
- Contexture :
    . chaîne : 7 fils/cm environ

. trame : 7 coups/cm environ.
- Répartition en masse :
  . chaîne : 50%
  . trame : 50 %.

Une telle structure ne comporte pas à proprement parler de fils de liage. Ce sont les fils de trame et de chaîne qui jouent le rôle de fils de liage. Pour pouvoir comparer cette structure textile à la structure textile (1), on peut estimer que le "taux de liage équivalent" est d'environ 50 %.

Enfin, la structure textile (3) présente les caractéristiques suivantes :
- Armure : structure textile réalisée selon la figure 8, sur laquelle les fils de trame portent la référence 40 et les fils de chaîne, la référence 50.

Les fils de chaîne 50 sont ondulés perpendiculairement au plan des fils de trame 40.
- Nature du fil :
  . chaîne : silionne 300 tex
  . trame : silionne 300 tex.
- Masse surfacique : 1045 g/m$^2$ environ.
- Contexture :
  . chaîne : 16,2 fils/cm
  . trame : 16,2 coups/cm.
- Répartition en masse :
  . chaîne : 50 %
  . trame : 50 %.

Comme pour la structure textile (2), la structure textile (3) ne comporte pas de fils de liage. Ce sont les fils de chaîne qui réalisent le liage. C'est pourquoi on peut définir ici encore un "taux de liage équivalent" qui est de 50 %.

Les essais ont été réalisés selon les normes IGC. Ces normes correspondent globalement à des normes ISO, les conditions fixées dans les normes ISO étant en-deçà de celles fixées dans les normes IGC. La correspondance que l'on peut établir sous ces réserves, sera indiquée dans chaque cas.

Tous ces essais ont été réalisés, selon les normes ci-après, sur des éprouvettes planes de 3 mm d'épaisseur environ de structures textiles (1), (2) et (3), comportant un taux volumique de fibres, c'est-à-dire le rapport volume de fibres de la structure textile sur volume du composite, de 52% et après mise en oeuvre de la résine epoxy LY 564-1/HY 2954 de Ciba Geigy.

La résine expoxy ci-dessus comporte les conditions d'utilisation suivantes :
- polymérisation : 1 heure à 110°C dans le moule,
- post-cuisson hors du moule : 4 heures à 145°C.

Pour obtenir ce taux volumique de fibres de 52 % pour les structures textiles (1), (2) et (3), il a fallu réaliser les empilements suivants :
- pour la structure textile (1) : empilement de 7 couches.
- pour la structure textile (2) : empilement de 14 couches.
- pour la structure textile (3) : empilement de 4 couches.

Enfin, tous ces essais ont été réalisés dans la direction chaîne.

Ils ont permis de déterminer :
- la contrainte de cisaillement à la rupture, selon la norme IGG 04 26 235 (ISO 4585),
- le module de flexion et la contrainte de flexion à la rupture, selon la norme IGC 04 26 245 (ISO 178),
- le module de traction et la contrainte de traction à la rupture, selon la norme IGC 04 26 250 (ISO 3268, 527, 9163).

Les résultats obtenus sont les suivants :

| Structure textile Essais | (1) | (2) | (3) |
|---|---|---|---|
| **CISAILLEMENT** | | | |
| – Contrainte | 53 MPa | 51 MPa | 39 MPa |
| **FLEXION** | | | |
| – Module | 22 400 MPa | 21 300 MPa | 14 800 MPa |
| – Contrainte | 690 MPa | 640 MPa | 310 MPa |
| **TRACTION** | | | |
| – Module | 20 500 MPa | 17 500 MPa | 16 500 MPa |
| – Contrainte | 520 MPa | 420 MPa | 400 MPa |

Ces résultats font apparaître que la structure textile (1) selon l'invention possède des propriétés mécaniques très largement supérieures à celles de la structure textile (3) tridirectionnelle, et sensiblement supérieures à celles de la structure textile (2), surtout en ce qui concerne la traction.

Ces essais relatifs aux propriétés mécaniques ont été complétés par des essais relatifs à la drapabilité, de façon à faire apparaître que la structure textile selon l'invention, contrairement aux structures textiles connues, présente à la fois de bonnes performances mécaniques et une haute aptitude à la déformation.

La notion de drapabilité ou encore de conformabilité n'est pas définie de façon précise dans le domaine des matériaux composites. Elle sera ici comprise comme la capacité d'un tissu à épouser une forme présentant des courbures dans plus de deux directions, étant entendu qu'un effort peut éventuellement être exercé lors de la mise en place du tissu.

Cet essai est, de façon classique, effectué sur une forme demi-sphérique de 100 mm de diamètre. La mesure de la drapabilité est donnée par la hauteur de la calotte sphérique que le tissu peut épouser sans faire le plis ou onduler.

Les essais de ce type déjà effectués ont montré que tous les tissus connus présentent une drapabilité inférieure à la hauteur de la demi-calotte sphérique. Ils ont de plus montré que la capacité de drapabilité des tissus est, dans un ordre croissant, la suivante : tissu d'armure taffetas, tissu d'armure sergé, tissu d'armure satin, tissu du type tridirectionnel.

De façon plus précise, les résultats de tels essais ont par exemple été rapportés dans l'article de M. P. LISSAC, publié dans la revue COMPOSITES, n° 3 - Mai-Juin 1985. Ces essais ont été effectués sur des tissus d'armure taffetas et d'armure satin.

Le meilleur résultat a été obtenu pour un tissu d'armure satin de 8 et de masse surfacique égale à 500 g/m$^2$. On a pu constater que pour ce tissu la hauteur de la calotte sphérique qu'il est possible de draper est comprise entre 40 et 50 mm. Elle est d'environ 40 mm pour un tissu de même armure et de masse surfacique égale à 600 g/m$^2$ comme la structure textile (1).

Cet essai a été réalisé pour une structure textile conforme à l'invention et identique à la structure textile (1) décrite précédemment.

On a constaté que la structure textile (1) présente une drapabilité qui dépasse les limites de ce test puisqu'elle épouse facilement la demi-sphère sur toute sa hauteur.

Il apparait donc que la structure textile selon l'invention présente une drapabilité supérieure à celle d'un tissu d'armure satin de 8, pour une masse surfacique identique.

Il a donc semblé intéressant d'évaluer la limite à partir de laquelle la structure textile (1) forme des plis. Pour cela, la demi-sphère 100 mm de diamètre a été prolongée par un cylindre de même diamètre. On a constaté que les premiers plis apparaissent pour une hauteur de cylindre supérieure à 50 mm.

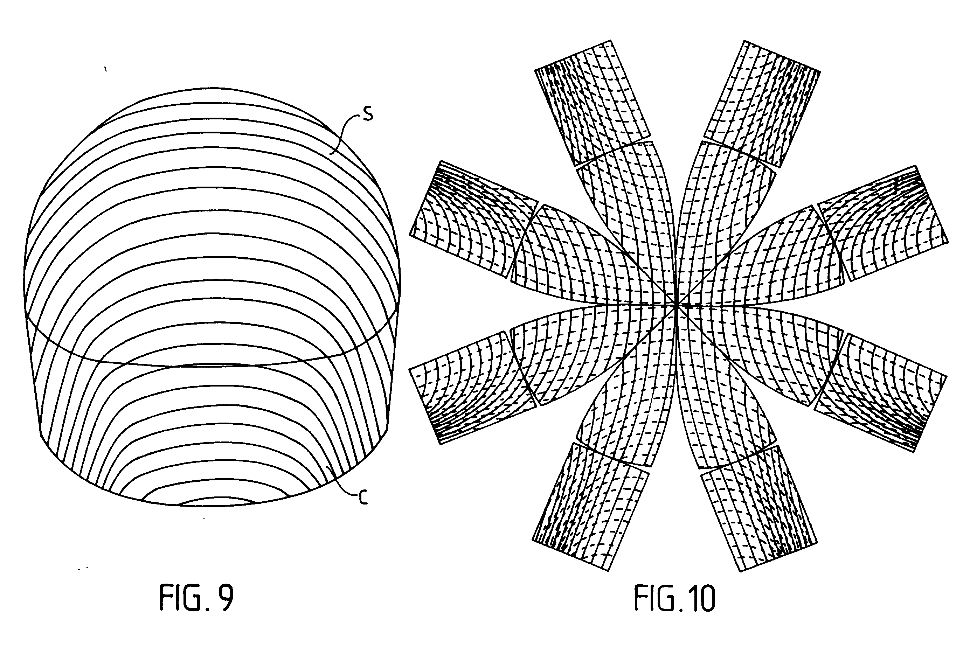

La figure 9 représente une vue cavalière d'une structure textile conforme à la structure textile (1), drapée sur une forme constituée d'un cylindre C de 100 mm de diamètre et 50 mm de hauteur, surmonté d'une demi-sphère S de 100 mm de diamètre. Les lignes courbes représentent un fil de chaîne sur dix et ne présentent pas d'irrégularités révélatrices de pli ou d'ondulation.

La figure 10 représente une vue développée de la structure textile de la figure 9. Les lignes continues représentent 1 fil de chaîne sur 10, les lignes discontinues représentent 1 fil de trame sur 10. Cette figure permet de mieux représenter l'ensemble de cette pièce et donne les orientations des fibres et les variations relatives locales de leur espacement.

Cette figure fait apparaître que le taux de fibres est sensiblement constant sur toute la calotte sphérique ainsi que dans la partie supérieure du cylindre. Le taux de fibre n'est plus homogène dans le reste du cylindre.

Il faut bien noter que l'homogénéité du taux de fibre doit être appréciée en comparant celle qui peut être obtenue par la structure textile selon l'invention et par les structures textiles connues. L'essai pratiqué sur la forme composée d'une demi-sphère prolongée d'un cylindre permet de mettre en évidence les limites de la structure textile selon l'invention mais surtout de montrer que ces limites se situent bien au-delà de celles des structures textiles connues puisque celles-ci forment des plis et donc a fortiori ne présentent pas un taux de fibres constant sur la calotte sphérique même.

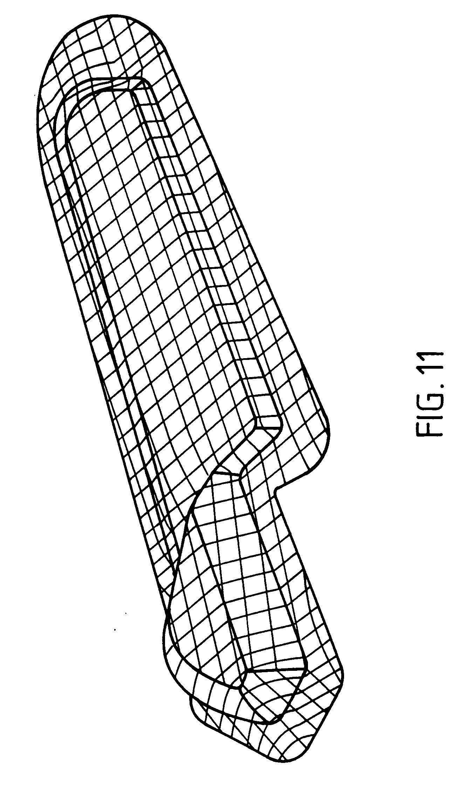

Un exemple d'utilisation de la structure textile selon l'invention est illustré par la figure 11. Les lignes représentent un fil de chaîne ou de trame sur dix. On constate que sur cette pièce, de forme complexe, aucun pli n'apparait et le taux de fibres est sensiblement constant sur toute la pièce. La structure textile utilisée est la structure textile (1).

Par contre, il n'est pas possible de draper sur cette pièce un tissu tel que les structures textiles (2) ou (3) définies précédemment, sans que des plis ne se forment.

Il apparait que l'homogénéité du taux de fibres à l'intérieur d'un tissu drapé sur une pièce donnée est liée à la profondeur de cette pièce. Ainsi, par exemple, le taux de fibres est sensiblement constant pour la pièce illustrée à la figure 11 qui est relativement peu profonde alors qu'il n'est plus homogène dans la pièce de la figure 9 qui est relativement profonde.

La structure textile qui vient d'être décrite peut aussi être utilisée après avoir été imprégnée de résine, en particulier thermodurcissable.

On peut noter qu'elle convient de plus pour la réalisation d'articles composites, notamment à base d'une résine avec renfort textile. Ces articles peuvent par exemple être obtenus par des procédés de moulage par injection. Les résines les plus couramment utilisées dans ce genre d'application sont en particulier les résines époxy, phénoliques, acryliques, bismaléimides, polyesters et autres.

Les signes de référence insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

**Revendications**

1. Structure textile comprenant une superposition de nappes unidirectionnelles de fils, dont les directions sont croisées les unes par rapport aux autres et qui sont liées par des fils de liage, ladite structure étant caractérisée en ce que le nombre de nappes superposées est au moins égal à trois, en ce que le taux de liage se situe entre 2 et 15 % environ et en ce que chaque fil de liage lie au moins un ensemble de fils de nappes superposées, cet ensemble étant défini par au moins un premier fil d'une première nappe et au moins un deuxième fil d'une deuxième nappe, ledit deuxième fil étant décalé par rapport au premier, la liaison des nappes étant ainsi suffisamment lâche pour maintenir la structure et lui permettre de se déformer.

2. Structure textile selon la revendication 1, caractérisée en ce que les fils de même direction sont répartis en rangées sensiblement superposées, chaque fil de liage liant au moins certains des fils d'une rangée en même temps qu'au moins certains fils d'au moins une rangée adjacente.

3. Structure textile selon l'une des revendications 1 ou 2, caractérisée en ce que les nappes sont parallèles entre elles.

4. Structure textile selon la revendication 3, caractérisée en ce que la direction des fils d'une nappe fait un angle de 90° avec celle des nappes adjacentes.

5. Structure textile selon l'une des revendications précédentes, caractérisée en ce que lesdites nappes sont formées de fils et fibres couramment utilisés dans la fabrication des matériaux composites, par exemple en métal, verre, carbone, carbure de silicium, bore ou aramide.

6. Structure textile selon l'une des revendications 1 à 5, caractérisée en ce que les fils constitutifs desdites nappes sont à base de la même matière.

7. Structure textile selon l'une des revendications 1 à 5, caractérisée en ce que les fils constitutifs desdites nappes sont de nature différente.

8. Structure textile selon l'une des revendications précédentes, caractérisée en ce que chaque nappe est de nature homogène ou hybride.

9. Structure textile selon l'une des revendications précédentes, caractérisée en ce que le diamètre des fils de liage est inférieur à celui ou ceux des fils constitutifs desdites nappes.

10. Structure textile selon l'une des revendications précédentes, caractérisée en ce que les fils de liage sont en fibre naturelle ou artificielle.

11. Structure textile selon l'une des revendications précédentes, caractérisée en ce que lesdits fils de liage sont des fils thermofusibles.

12. Structure textile selon l'une des revendications 1 à 10, caractérisée en ce que lesdits fils de liage sont de nature thermoplastique ou associés à une résine thermoplastique.

13. Structure textile selon l'une des revendications précédentes, caractérisée en ce que lesdits fils constitutifs desdites nappes sont de nature thermoplastique ou associés à une résine thermoplastique.

14. Structure textile selon l'une des revendications précédentes caractérisé en ce qu'elle est pré-imprégnée de résine, en particulier thermodurcissable.

15. Article composite incorporant au moins une structure textile selon l'une quelconque des revendications 1 à 14.

**Patentansprüche**

1. Textilstruktur, umfassend eine Übereinanderlagerung von in einer Richtung ausgerichteten Vliesen aus Fasern, deren Richtungen in Bezug aufeinander gekreuzt sind, und die durch Bindungsfasern verknüpft sind, wobei die Struktur dadurch gekennzeichnet ist, daß die Anzahl der übereinandergelagerten Vliese zumindest drei beträgt, daß die Bindungsrate zwischen etwa 2 und 15% beträgt und daß jede Bindungsfaser zumindest eine Gruppe von Fasern der übereinandergelagerten Vliese verbindert, wobei diese Gruppe definiert ist durch zumindest eine erste Faser eines ersten Vlieses und zumindest eine zweite Faser eines zweiten Vlieses, wobei die zweite Faser in Bezug auf die erste verschoben ist, wobei die Verknüpfung der Vliese somit hinreichend lose ist, um die Struktur beizubehalten und es ihr zu ermöglichen, sich zu deformieren.

2. Textilstruktur gemäß Anspruch 1, dadurch gekennzeichnet, daß die Fasern der gleichen Richtung in im wesentlichen übereinandergelagerten Reihen verteilt sind, wobei jede Verbindungsfaser zumindest bestimmte der Fasern einer Reihe gleichzeitig mit zumindest bestimmten Fasern zumindest einer benachbarten Reihe verbindet.

3. Textilstruktur gemäß einem der Ansprüche 1 oder 2, dadurch gekennzeichnet, daß die Vliese untereinander parallel sind.

4. Textilstruktur gemäß Anspruch 3, dadurch gekennzeichnet, daß die Richtung der Fasern eines Vlieses einen Winkel von 90° mit derjenigen der benarchbarten Vliese bildet.

EP 0 419 645 B1

5. Textilstruktur gemäß einem der vorhergehenden Ansprüche, dadurch gekennzeichnet, daß die Vliese gebildet werden aus Fasern und Fasermaterialien, wie sie häufig bei der Herstellung von Verbundmaterialien verwendet werden, z.B. aus Metall, Glas, Kohlenstoff, Siliciumcarbid, Bor oder Aramid.

6. Textilstruktur gemäß einem der Ansprüche 1 bis 5, dadurch gekennzeichnet, daß die die Vliese bildenden Fasern auf der Basis des gleichen Materials gebildet sind.

7. Textilstruktur gemäß einem der Ansprüche 1 bis 5, dadurch gekennzeichnet, daß die die Vliese bildenden Fasern unterschiedlicher Natur sind.

8. Textilstruktur gemäß einem der vorhergehenden Ansprüche, dadurch gekennzeichnet, daß jedes Vlies homogener oder hybrider Struktur ist.

9. Textilstruktur gemäß einem der vorhergehenden Ansprüche, dadurch gekennzeichnet, daß der Durchmesser der Bindungsfasern geringer ist als derjenige oder diejenigen der die Vliese bildenden Fasern.

10. Textilstruktur gemäß einem der vorhergehenden Ansprüche, dadurch gekennzeichnet, daß die Bindungsfasern aus natürlichem oder künstlichem Fasermaterial bestehen.

11. Textilstruktur gemäß einem der vorhergehenden Ansprüche, dadurch gekennzeichnet, daß die Bindungsfasern wärmeschmelzbare Fasern sind.

12. Textilstruktur gemäß einem der Ansprüche 1 bis 10, dadurch gekennzeichnet, daß die Bindungsfasern thermoplastischer Natur sind oder mit einem thermoplastischen Harz assoziiert sind.

13. Textilstruktur gemäß einem der vorhergehenden Ansprüche, dadurch gekennzeichnet, daß die die Vliese bildenden Fasern thermoplastischer Natur sind oder mit einem thermoplastischen Harz assoziiert sind.

14. Textilstruktur gemäß einem der vorhergehenden Ansprüche, dadurch gekennzeichnet, daß sie mit einem Harz, insbesondere einem wärmehärtbaren Harz, preimprägniert ist.

15. Verbundartikel, beinhaltend zumindest eine Textilstruktur gemäß einem der Ansprüche 1 bis 14.

## Claims

1. Textile structure comprising a superposition of unidirectional layers of yarns, the directions of which are crossed in relation to one another and which are tied by tying yarns, said structure being characterised in that the number of superposed layers is at least equal to three, in that the tying rate lies between 2 and 15% approximately and in that each tying yarn ties at least one set of yarns of superposed layers, this set being defined by at least a first yarn of a first layer and at least a second yarn of a second layer, said second yarn being staggered in relation to the first, the connection of the layers thus being sufficiently loose in order to keep the structure in position and allow it to deform.

2. Textile structure according to Claim 1, characterised in that the yarns in the same direction are distributed in essentially superposed rows, each tying yarn tying at least certain of the yarns of one row at the same time as at least certain yarns of at least one adjacent row.

3. Textile structure according to one of Claims 1 or [sic] 2, characterised in that the layers are parallel with one another.

4. Textile structure according to Claim 3, characterised in that the direction of the yarns of one layer forms an angle of 90° with that of the adjacent layers.

5. Textile structure according to one of the preceding claims, characterised in that said layers are formed of yarns and fibers commonly used in the manufacture of composite materials, for example made of metal, glass, carbon, silicon carbide, boron or aramid.

6. Textile structure according to one of Claims 1 to 5, characterised in that the yarns constituting said layers are based on the same material.

11

7. Textile structure according to one of Claims 1 to 5, characterised in that the yarns constituting said layers are of different nature.

8. Textile structure according to one of the preceding claims, characterised in that each layer is of uniform or hybrid nature.

9. Textile structure according to one of the preceding claims, characterised in that the diameter of the tying yarns is smaller than that or those of the yarns constituting said layers.

10. Textile structure according to one of the preceding claims, characterised in that the tying yarns are made of natural or artificial fiber.

11. Textile structure according to one of the preceding claims, characterised in that said tying yarns are heat-meltable yarns.

12. Textile structure according to one of Claims 1 to 10, characterised in that said tying yarns are of thermoplastic nature, or associated with a thermoplastic resin.

13. Textile structure according to one of the preceding claims, characterised in that said yarns constituting said layers are of thermoplastic nature or associated with a thermoplastic resin.

14. Textile structure according to one of the preceding claims, characterised in that it is preimpregnated with, in particular thermosetting, resin.

15. Composite article incorporating at least one textile structure according to any one of claims 1 to 14.

FIG. 1

FIG. 2

FIG. 3

FIG. 4

FIG. 5

FIG. 6

FIG. 7

FIG. 8

ART ANTERIEUR

FIG. 10

FIG. 9

FIG. 11